# FASCICULE DE BREVET EUROPEEN

(11) **EP 3 526 106 B1**
(45) Date de publication et mention de la délivrance du brevet: **28.10.2020**
(21) Numéro de dépôt: 17777312.4
(22) Date de dépôt: 14.09.2017
(51) Int. Cl.: B62D 25/04, B62D 25/14, B62D 27/02, B62D 29/00

(54) **STRUCTURE D'UNE PARTIE AVANT DE LA CAISSE D'UN VEHICULE, NOTAMMENT AUTOMOBILE**
STRUKTUR EINES VORDEREN TEILS DER ROHKAROSSERIE EINES FAHRZEUGS, INSBESONDERE EINES KRAFTFAHRZEUGS
STRUCTURE OF A FRONT PART OF THE BODYSHELL OF A VEHICLE, NOTABLY A MOTOR VEHICLE

(30) Priorité: 11.10.2016 FR 1659836
(43) Date de publication de la demande: 21.08.2019
(73) Titulaire: PSA Automobiles S.A., 78300 Poissy (FR)
(72) Inventeur: PERU, Marc, 92290 Chatenay-Malabry (FR); PENLOUP, Mathieu, 92330 Sceaux (FR)
(86) Numéro de dépôt international: PCT/FR2017/052462
(87) Numéro de publication internationale: WO 2018/069591

(56) Documents cités:
- EP-A1- 2 014 540
- EP-A1- 2 281 732
- FR-A1- 2 986 761
- US-A1- 2004 113 462

## Description

L'invention concerne une structure d'une partie avant de la caisse d'un véhicule, notamment automobile.

De manière connue en soi, une structure de partie avant d'une caisse d'un véhicule automobile comprend un tablier transversal destiné à séparer l'habitacle du compartiment moteur du véhicule. Cette structure comprend en outre divers éléments de carrosserie, comprenant en particulier une traverse latérale de tablier agencée pour renforcer le tablier transversal de la structure, une traverse inférieure de baie sur laquelle repose la partie inférieure du pare-brise du véhicule, et un stabilisateur de brancard venant en appui contre un brancard correspondant du véhicule, un brancard étant un élément de la carrosserie soudé à une traverse du véhicule et disposé dans le prolongement d'un longeronnet.

Ces trois éléments de carrosserie sont tous reliés chacun par une extrémité à un pied avant d'une porte avant du véhicule. Cependant, lors de chocs frontaux violents dont les efforts sont notamment concentrés uniquement sur un côté de la partie avant du véhicule et recouvrant au maximum vingt-cinq pour cents de la surface de recouvrement de cette partie avant du véhicule, il est courant que les liaisons entre les éléments de la carrosserie et le pied avant correspondant soient rompues, ce qui présente un danger pour le conducteur et le cas échéant les passagers du véhicule.

Il est décrit dans le document EP 2014540 une structure d'une partie avant de la caisse d'un véhicule, comprenant deux cloisons latérales renforçant la traverse inférieure de baie, les cloisons étant fixées chacune à un gousset correspondant et à une extrémité de la traverse inférieure de baie, chaque gousset s'étendant longitudinalement par rapport au véhicule et étant solidaire de la traverse inférieure de baie et d'un support de suspension. Ainsi, la présence de ces cloisons latérales permet de raidir la traverse inférieure de baie, ce qui diminue les vibrations du pare-brise et l'émission de bruits en vibrant.

Cependant, ces cloisons latérales ne sont pas prévues pour renforcer la structure de partie avant du véhicule, et n'apportent donc pas de sécurité supplémentaire lors de la survenue d'un choc frontal.

La présente invention a pour but de pallier les inconvénients ci-dessus de l'art antérieur.

Pour atteindre ce but, l'invention concerne une structure de partie avant de la caisse d'un véhicule, notamment automobile, comprenant trois éléments de carrosserie comprenant :
- une traverse latérale de tablier agencée pour renforcer un tablier transversal de la structure de partie avant séparant l'habitacle du compartiment moteur du véhicule ;
- une traverse inférieure de baie sur laquelle repose la partie inférieure du pare-brise du véhicule ;
- un stabilisateur de brancard venant en appui contre un brancard correspondant du véhicule ;
ces éléments de carrosserie étant reliés chacun par une extrémité à un pied avant du véhicule, la structure de partie avant comprenant des moyens de renfort solidaires du pied avant et des extrémités correspondantes des éléments de carrosserie de manière à renforcer les liaisons entre le pied avant et les éléments de carrosserie, pour éviter la rupture de ces liaisons en cas de choc frontal du véhicule.

Selon une autre particularité, les moyens de renfort comprennent trois manchons indépendants recouvrant respectivement les extrémités des trois éléments de carrosserie reliées au pied avant correspondant, chaque manchon comprenant des bords tombés solidaires du pied avant.

Selon une autre particularité, chaque manchon est réalisé à partir d'une tôle d'acier à haute limite d'élasticité emboutie d'épaisseur comprise entre un et deux millimètres, préférentiellement de l'ordre de 1,5 millimètres.

Selon une autre particularité, chaque manchon est réalisé en un matériau composite à base de fibres de carbone et présente une épaisseur comprise entre quatre et six millimètres, préférentiellement de l'ordre de cinq millimètres.

Selon une autre particularité, les moyens de renfort sont réalisés en une seule pièce de renfort recouvrant les extrémités des trois éléments de carrosserie reliées au pied avant correspondant, la pièce de renfort comprenant des bords tombés solidaires du pied avant correspondant.

Selon une autre particularité, la pièce de renfort est réalisée à partir d'une tôle d'acier à haute limite d'élasticité emboutie d'épaisseur comprise entre un et deux millimètres, préférentiellement de l'ordre de 1,5 millimètres.

Selon une autre particularité, la pièce de renfort est réalisée en un matériau composite à base de fibres de carbone et présente une épaisseur comprise entre quatre et six millimètres, préférentiellement de l'ordre de cinq millimètres.

Selon une autre particularité, la structure de partie avant comprend une traverse de planche de bord agencée pour renforcer la planche de bord du véhicule et dont une extrémité est fixée au pied avant correspondant, et en ce que l'un des bords tombés de la pièce de renfort est disposée au niveau de l'interface de fixation entre la traverse de planche de bord et le pied avant correspondant, ce bord tombé étant interposé entre le pied avant et l'extrémité de la traverse de planche de bord fixée au pied avant.

L'invention concerne également un véhicule automobile dont la caisse comprend une structure de partie avant telle que décrite précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :
- La figure 1 représente une vue en perspective, depuis l'habitacle d'un véhicule, d'une structure de partie avant connue de ce véhicule ;
- Les figures 2a à 2c représentent chacune un détail de la structure de la figure 1 et montrant une partie des moyens de renfort de l'invention selon un premier mode de réalisation, chaque partie étant solidaire d'un élément de carrosserie de la structure de partie avant et du pied avant correspondant ;
- La figure 3a représente un détail de la structure de la figure 1, sur laquelle des moyens de renfort, constitués par une pièce unique conformément à un second mode de réalisation de l'invention, sont solidarisés ;
- La figure 3b représente une vue en perspective de la pièce unique de renfort de la figure 3a.

En référence aux figures, la structure de partie avant de la caisse d'un véhicule automobile va maintenant être décrite.

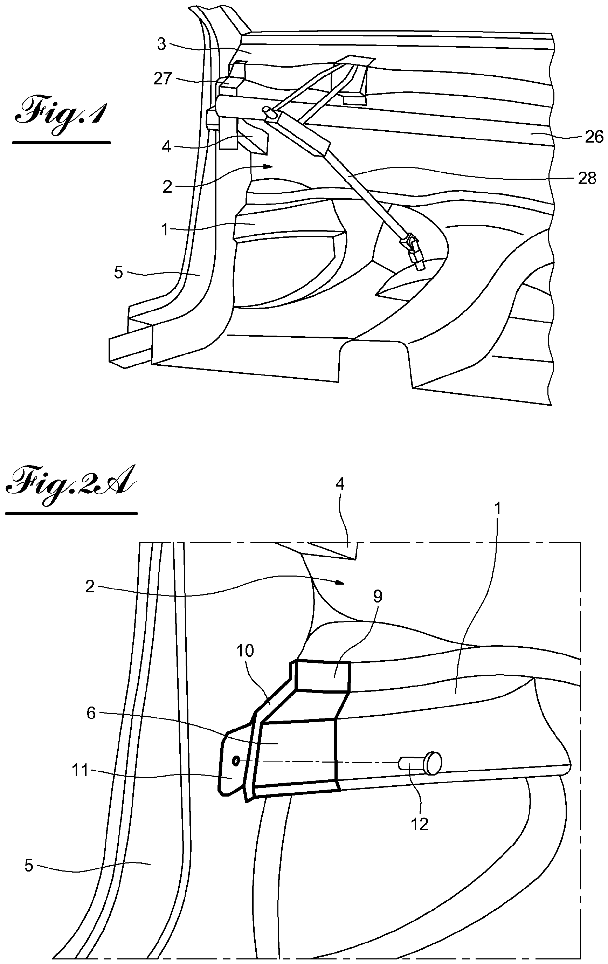

La figure 1 représente une vue depuis l'habitacle de cette structure de partie avant, plus précisément la structure de partie avant gauche du véhicule dans le sens de marche avant du véhicule, c'est-à-dire comportant la portion de l'habitacle destinée à accueillir le conducteur du véhicule.

La structure de partie avant comprend un tablier transversal 2. Ce tablier 2 est destiné à séparer l'habitacle du compartiment moteur du véhicule. La structure de partie avant comprend également un pied avant 5 auquel est généralement montée pivotante la porte avant correspondante du véhicule, et dont la fonction est de stabiliser et de rigidifier l'habitacle du véhicule. Chaque pied avant 5 est relié au reste de la structure de partie avant par l'intermédiaire de divers éléments de carrosserie de la structure de partie avant. En particulier, quatre de ces éléments vont maintenant être décrits.

Un premier élément de carrosserie comprend une traverse latérale de tablier 1, agencée pour renforcer le tablier transversal 2 de la structure de partie avant. Cette traverse 1, comme toutes les autres traverses décrites ci-après, a une forme de poutrelle creuse réalisée à partir de tôle d'acier. Les extrémités opposées de la traverse latérale de tablier 1 sont respectivement soudées aux deux pieds avant gauche 5 et droite du véhicule par rapport au sens de déplacement en marche avant du véhicule.

Un deuxième élément de carrosserie comprend une traverse inférieure de baie 3 sur laquelle repose la partie inférieure du pare-brise du véhicule. Les extrémités opposées de la traverse inférieure de baie 3 sont respectivement soudées aux deux pieds avant gauche 5 et droite du véhicule, ces pieds étant disposés respectivement à gauche et à droite.

Un troisième élément de carrosserie comprend un stabilisateur de brancard 4. Le stabilisateur de brancard 4 représenté sur la figure 1 a également la forme d'une poutrelle creuse réalisée à partir d'une tôle d'acier et s'étendant longitudinalement au véhicule. Sa fonction est de venir en appui contre le brancard correspondant. En outre, ses extrémités opposées sont soudés respectivement au pied avant correspondant 5 et à l'extrémité du brancard correspondant.

Un quatrième élément de carrosserie comprend une traverse de planche de bord 26 montée transversalement au véhicule et agencée pour renforcer la planche de bord du véhicule. Cette traverse de planche de bord 26 est solidaire à ses deux extrémités opposées aux deux pieds avant gauche 5 et droite du véhicule. De préférence, la traverse de planche de bord 26 a la forme d'un tube et sera nommée dans la suite de la description tube de planche de bord 26. Ce tube, dont une extrémité 27 est reliée par soudure ou vissage au pied avant correspondant 5, a pour fonction d'assurer la tenue de la colonne de direction 28 et du volant relié à l'extrémité de cette colonne de direction. En particulier, en cas de choc frontal, le tube de planche de bord 26 empêche la colonne de direction 28 et le volant de remonter vers la planche de bord.

Selon l'invention, la structure de partie avant comprend des moyens de renfort solidaires du pied avant 5 et des extrémités correspondantes des premier 1, deuxième 3 et troisième 4 éléments de carrosserie de manière à renforcer les liaisons entre le pied avant 5 et ces éléments de carrosserie 1, 3, 4. Ces moyens de renfort sont réalisés à partir d'une tôle d'acier à haute limite d'élasticité emboutie, dont l'épaisseur est comprise entre un et deux millimètres. Préférentiellement, cette tôle présente une épaisseur de l'ordre de 1,5 millimètres.

Alternativement, les moyens de renfort sont réalisés en un matériau composite à base de fibres de carbone moulé sur la structure de partie avant. Les moyens de renfort présentent dans cette alternative une épaisseur comprise entre quatre et six millimètres, préférentiellement de l'ordre de cinq millimètres.

Selon un premier mode de réalisation représenté sur les figures 2a à 2c, les moyens de renforts comprennent trois manchons indépendants 6, 7, 8, chacun réalisé tel que décrit ci-dessus soit à partir d'une tôle d'acier à haute limite d'élasticité emboutie sur l'élément de carrosserie correspondant, soit en un matériau composite à base de fibres de carbone moulé sur l'élément de carrosserie correspondant.

Le premier manchon 6, représenté sur la figure 2a, épouse la forme de l'extrémité de la traverse latérale de tablier 1 et recouvre cette dernière. Le premier manchon 6 est fixé à cette extrémité par exemple par collage à l'aide d'une colle structurale. Le premier manchon 6 comprend des bords tombés 9, 10 qui sont solidarisés par collage respectivement au tablier transversal 2 et au pied avant correspondant 5. En outre, le premier manchon 6 comprend une patte de fixation 11 s'étendant de l'un des bords montés 10 solidaire du pied avant 5, cette patte de fixation 11 étant située dans le plan du bord tombé correspondant et fixée par vissage à l'aide d'au moins une vis 12 au pied avant correspondant 5, pour renforcer la liaison entre le premier manchon 6, le pied avant 5 et la traverse latérale de tablier 1. De manière préférentielle, la vis est du type auto-taraudeuse dans la structure existante, ce qui évite la réalisation préalable de trous filetés dans la structure existante.

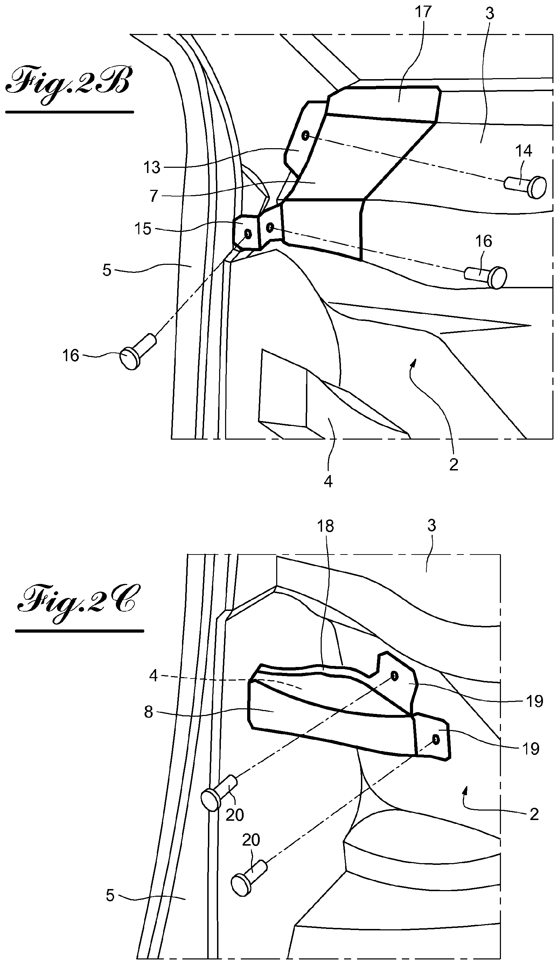

Le deuxième manchon 7, représenté sur la figure 2b, épouse la forme de l'extrémité de la traverse inférieure de baie 3 et recouvre cette dernière. Le deuxième manchon 7 est fixé à cette extrémité par exemple par collage à l'aide d'une colle structurale. Le deuxième manchon 7 comprend un bord tombé 13 qui est solidarisé par vissage à l'aide d'au moins une vis 14 au pied avant correspondant 5. En outre, le deuxième manchon 7 comprend une patte de fixation 15 s'étendant du corps du manchon 7, cette patte de fixation 15 étant fixée par vissage à l'aide d'au moins deux vis 16 au pied avant correspondant 5, pour renforcer la liaison entre le deuxième manchon 7, le pied avant 5 et la traverse inférieure de baie 3. De manière préférentielle, les vis sont du type auto-taraudeuses dans la structure existante. Enfin, le deuxième manchon 7 comprend un autre bord tombé 17 solidarisé par collage à la traverse inférieure de baie 3.

Le troisième manchon 8, représenté figure 2c, épouse la forme de l'extrémité du stabilisateur de brancard 4 et recouvre ce dernier. Le troisième manchon 8 est fixé au stabilisateur de brancard 4 par exemple par collage à l'aide d'une colle structurale. Ce troisième manchon 8 comprend un bord tombé 18 qui est solidarisé par collage au pied avant correspondant 5. En outre, le troisième manchon comprend deux pattes de fixation 19 s'étendant du corps du manchon, ces pattes de fixation étant fixées par vissage chacune à l'aide d'au moins une vis 20 au tablier transversal 2, pour renforcer la liaison entre le troisième manchon 8, le pied avant 5 et le stabilisateur de brancard 4. De manière préférentielle, les vis sont du type auto-taraudeuses dans la structure existante.

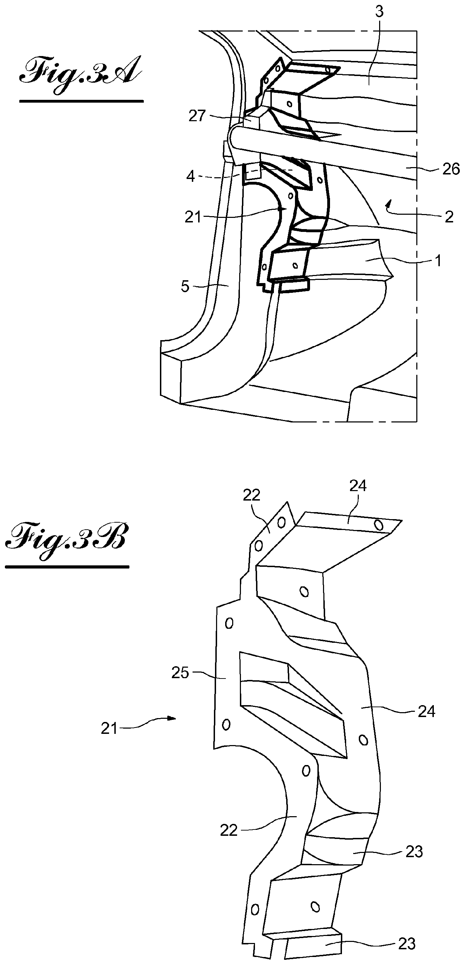

Dans un second mode de réalisation représenté sur les figures 3a et 3b, les moyens de renfort sont réalisés en une seule pièce 21 recouvrant simultanément les extrémités des trois éléments de carrosserie 1, 3, 4 décrits ci-dessus. De manière à être fixée sur la structure de partie avant, la pièce de renfort 21 est collée à l'aide d'une colle structurale, et vissée par endroit notamment au niveau des traverses respectivement transversale de tablier 1 et inférieure de baie 3.

En outre, la pièce de renfort comprend des bords tombés (22, 25 ; 23 ; 24) fixés respectivement :
- par vissage au pied avant correspondant 5, à l'aide de vis insérées transversalement au véhicule ;
- par collage au niveau du tablier transversal 2, au voisinage de la traverse latérale de tablier 1 ;
- par vissage au niveau de la traverse inférieure de baie 3 et au voisinage du stabilisateur de brancard 4, à l'aide de vis insérées longitudinalement au véhicule.

De manière préférentielle, les vis sont du type auto-taraudeuses dans la structure existante. Enfin, de manière à renforcer la liaison entre la pièce de renfort 21, le pied avant correspondant 5 et les éléments de carrosserie 1, 3, 4 de la structure de partie avant, l'un des bords tombés 25 de la pièce de renfort 21 est disposé au niveau de l'interface de fixation entre le tube de planche de bord 26 et le pied avant correspondant 5. De la sorte, ce bord tombé 25 est interposé entre le pied avant 5 et l'extrémité de fixation 27 du tube de planche de bord 26 fixée au pied avant 5. Cette disposition particulière de la pièce de renfort 21 est avantageuse, car cette interface de liaison est déjà existante et particulièrement robuste.

Ainsi, quel que soit le mode de réalisation des moyens de renfort, ces derniers permettent de renforcer les liaisons entre les éléments de carrosserie 1, 3, 4 de la structure de partie avant décrits ci-dessus et le pied avant correspondant 5, ce qui permet d'éviter la rupture de ces liaisons en cas de choc frontal du véhicule, même si un tel choc frontal a lieu à une vitesse d'au moins soixante-quatre kilomètres par heure sur au maximum vingt-cinq pour cents de la surface de recouvrement de la partie avant du véhicule et s'étendant le long d'un côté de ce véhicule.

## Revendications

1. Structure de partie avant de la caisse d'un véhicule, notamment automobile, comprenant trois éléments de carrosserie comprenant :
• une traverse latérale de tablier (1) agencée pour renforcer un tablier transversal (2) de la structure de partie avant séparant l'habitacle du compartiment moteur du véhicule ;
• une traverse inférieure de baie (3) sur laquelle repose la partie inférieure du pare-brise du véhicule ;
• un stabilisateur de brancard (4) venant en appui contre un brancard correspondant du véhicule ;
ces éléments de carrosserie (1, 3, 4) étant reliés chacun par une extrémité à un pied avant (5) du véhicule, **caractérisée en ce que** la structure de partie avant comprend des moyens de renfort solidaires du pied avant (5) et des extrémités correspondantes des éléments de carrosserie (1, 3, 4) de manière à renforcer les liaisons entre le pied avant (5) et les éléments de carrosserie (1, 3, 4), pour éviter la rupture de ces liaisons en cas de choc frontal du véhicule.

2. Structure de partie avant selon la revendication 1, **caractérisée en ce que** les moyens de renfort comprennent trois manchons indépendants (6, 7, 8) recouvrant respectivement les extrémités des trois éléments de carrosserie (1, 3, 4) reliées au pied avant correspondant (5), chaque manchon (6, 7, 8) comprenant des bords tombés (10, 13, 18) solidaires du pied avant.

3. Structure de partie avant selon la revendication 2, **caractérisée en ce que** chaque manchon (6, 7, 8) est réalisé à partir d'une tôle d'acier à haute limite d'élasticité emboutie d'épaisseur comprise entre un et deux millimètres, préférentiellement de l'ordre de 1,5 millimètres.

4. Structure de partie avant selon la revendication 2, **caractérisée en ce que** chaque manchon (6, 7, 8) est réalisé en un matériau composite à base de fibres de carbone et présente une épaisseur comprise entre quatre et six millimètres, préférentiellement de l'ordre de cinq millimètres.

5. Structure de partie avant selon la revendication 1, **caractérisée en ce que** les moyens de renfort sont réalisés en une seule pièce de renfort (21) recouvrant les extrémités des trois éléments de carrosserie (1, 3, 4) reliées au pied avant correspondant (5), la pièce de renfort (21) comprenant des bords tombés (22, 25) solidaires du pied avant correspondant (5).

6. Structure de partie avant selon la revendication 5, **caractérisée en ce que** la pièce de renfort est réalisée à partir d'une tôle d'acier à haute limite d'élasticité emboutie d'épaisseur comprise entre un et deux millimètres, préférentiellement de l'ordre de 1,5 millimètres.

7. Structure de partie avant selon la revendication 5, **caractérisée en ce que** la pièce de renfort (21) est réalisée en un matériau composite à base de fibres de carbone et présente une épaisseur comprise entre quatre et six millimètres, préférentiellement de l'ordre de cinq millimètres.

8. Structure de partie avant selon l'une quelconque des revendications 5 à 7, **caractérisée en ce qu'**elle comprend une traverse de planche de bord (26) agencée pour renforcer la planche de bord du véhicule et dont une extrémité (27) est fixée au pied avant correspondant (5), et **en ce que** l'un des bords tombés (25) de la pièce de renfort est disposée au niveau de l'interface de fixation entre la traverse de planche de bord (26) et le pied avant correspondant (5), ce bord tombé (25) étant interposé entre le pied avant (5) et l'extrémité (27) de la traverse de planche de bord (26) fixée au pied avant (5).

9. Véhicule automobile dont la caisse comprend une structure de partie avant selon l'une quelconque des revendications 1 à 8.

## Patentansprüche

1. Vorderteilstruktur der Karosserie eines Fahrzeugs, insbesondere eines Kraftfahrzeugs, bestehend aus drei Karosserieteilen mit :
- einem seitlichen Schürzenquerträger (1), der so angeordnet ist, dass er eine Querschürze (2) der Vorderteilstruktur, die den Fahrgastraum vom Motorraum des Fahrzeugs trennt, verstärkt;
- einem unteren Querträger (3), auf dem der untere Teil der Windschutzscheibe des Fahrzeugs ruht;
- einen Tragenstabilisator (4), der an einer entsprechenden Trage des Fahrzeugs anliegt;
wobei diese Karosserieelemente (1, 3, 4) jeweils mit einem Ende mit einem Vorderfuß (5) des Fahrzeugs verbunden sind, **dadurch gekennzeichnet, dass** die Struktur des Vorderteils Verstärkungsmittel umfasst, die mit dem Vorderfuß (5) und entsprechenden Enden der Karosserieelemente (1, 3, 4) fest verbunden sind, um die Verbindungen zwischen dem Vorderfuß (5) und den Karosserieelementen (1, 3, 4) zu verstärken, um das Aufreißen dieser Verbindungen im Falle eines Frontalaufpralls des Fahrzeugs zu verhindern.

2. Vorderteilstruktur nach Anspruch 1, **dadurch gekennzeichnet, dass** die Verstärkungsmittel drei unabhängige Hülsen (6, 7, 8) umfassen, die jeweils die Enden der drei Karosserieelemente (1, 3, 4) abdecken, die mit dem entsprechenden Vorderfuß (5) verbunden sind, wobei jede Hülse (6, 7, 8) umgefallene Ränder (10, 13, 18) aufweist, die fest mit dem Vorderfuß verbunden sind.

3. Vorderteilstruktur nach Anspruch 2, **dadurch gekennzeichnet, dass** jede Hülse (6, 7, 8) aus einem tiefgezogenen Stahlblech hoher Streckgrenze mit einer Dicke zwischen einem und zwei Millimetern, vorzugsweise in der Größenordnung von 1,5 Millimetern, hergestellt ist.

4. Vorderteilstruktur nach Anspruch 2, **dadurch gekennzeichnet, dass** jede Hülse (6, 7, 8) aus einem Verbundmaterial auf der Basis von Kohlenstofffasern besteht und eine Dicke zwischen vier und sechs Millimetern, vorzugsweise in der Größenordnung von fünf Millimetern, aufweist.

5. Vorderteilstruktur nach Anspruch 1, **dadurch gekennzeichnet, dass** die Verstärkungsmittel aus einem einzigen Verstärkungsteil (21) bestehen, das die Enden der drei Karosserieelemente (1, 3, 4) abdeckt, die mit dem entsprechenden Vorderfuß (5) verbunden sind, wobei das Verstärkungsteil (21) umgefallene Ränder (22, 25) aufweist, die fest mit dem entsprechenden Vorderfuß (5) verbunden sind.

6. Vorderteilstruktur nach Anspruch 5, **dadurch gekennzeichnet, dass** das Verstärkungsteil aus einem tiefgezogenen Stahlblech hoher Streckgrenze mit einer Dicke zwischen einem und zwei Millimetern, vorzugsweise in der Größenordnung von 1,5 Millimetern, hergestellt ist.

7. Vorderteilstruktur nach Anspruch 5, **dadurch gekennzeichnet, dass** das Verstärkungsteil (21) aus einem Verbundmaterial auf der Basis von Kohlenstofffasern besteht und eine Dicke zwischen vier und sechs Millimetern, vorzugsweise in der Größenordnung von fünf Millimetern, aufweist.

8. Vorderteilstruktur nach einem der Ansprüche 5 bis 7, **dadurch gekennzeichnet, dass** sie einen Querträger (26) des Armaturenbretts umfasst, der zur Verstärkung des Armaturenbretts des Fahrzeugs angeordnet ist und dessen eines Ende (27) am entsprechenden Vorderfuß (5) befestigt ist, und dass eine der Fallkanten (25) des Verstärkungsteils an der Befestigungsschnittstelle zwischen dem Querträger (26) des Armaturenbretts und dem entsprechenden Vorderfuß (5) angeordnet ist, wobei diese Fallkante (25) zwischen dem Vorderfuß (5) und dem Ende (27) des am Vorderfuß (5) befestigten Querträgers (26) des Armaturenbretts angeordnet ist.

9. Ein Kraftfahrzeug, dessen Karosserie eine Vorderteilstruktur nach einem der Ansprüche 1 bis 8 aufweist.

## Claims

1. Structure of the front part of the body of a vehicle, in particular a motor vehicle, comprising three body parts comprising :
- a side apron cross member (1) arranged to reinforce a transverse apron (2) of the front part structure separating the passenger compartment from the engine compartment of the vehicle;
- a lower window cross-member (3) on which the lower part of the vehicle windscreen rests;
- a stretcher stabiliser (4) resting against a corresponding stretcher of the vehicle;
these bodywork elements (1, 3, 4) each being connected by one end to a front foot (5) of the vehicle, **characterised in that** the front part structure comprises reinforcement means integral with the front foot (5) and corresponding ends of the bodywork elements (1, 3, 4) so as to reinforce the connections between the front foot (5) and the bodywork elements (1, 3, 4), in order to avoid the rupture of these connections in the event of a frontal impact of the vehicle.

2. Front part structure according to claim 1, **characterised in that** the reinforcement means comprise three independent sleeves (6, 7, 8) respectively covering the ends of the three bodywork elements (1, 3, 4) connected to the corresponding front foot (5), each sleeve (6, 7, 8) comprising fallen edges (10, 13, 18) integral with the front foot.

3. Front part structure according to claim 2, **characterised in that** each sleeve (6, 7, 8) is made from a deep-drawn high yield strength steel sheet with a thickness of between one and two millimetres, preferably of the order of 1.5 millimetres.

4. Front part structure according to claim 2, **characterised in that** each sleeve (6, 7, 8) is made of a carbon fibre-based composite material and has a thickness of between four and six millimetres, preferably of the order of five millimetres.

5. Front part structure according to claim 1, **characterised in that** the reinforcing means are made in a single reinforcing piece (21) covering the ends of the three bodywork elements (1, 3, 4) connected to the corresponding front foot (5), the reinforcing piece (21) comprising fallen edges (22, 25) integral with the corresponding front foot (5).

6. Front part structure according to claim 5, **characterised in that** the reinforcing part is made from a deep-drawn high yield strength steel sheet with a thickness of between one and two millimetres, preferably of the order of 1.5 millimetres.

7. Front part structure according to claim 5, **characterised in that** the reinforcing part (21) is made of a carbon fibre-based composite material and has a thickness of between four and six millimetres, preferably of the order of five millimetres.

8. Front part structure according to any one of claims 5 to 7, **characterised in that** it comprises a dashboard cross member (26) arranged to reinforce the dashboard of the vehicle and one end (27) of which is fixed to the corresponding front foot (5), and **in that** one of the fallen edges (25) of the reinforcing piece is disposed at the fixing interface between the dashboard cross member (26) and the corresponding front foot (5), this fallen edge (25) being interposed between the front foot (5) and the end (27) of the dashboard cross member (26) fixed to the front foot (5).

9. A motor vehicle whose body comprises a front part structure according to any of claims 1 to 8.
